# EUROPÄISCHE PATENTSCHRIFT

(11) **EP 1 705 776 B1**
(45) Veröffentlichungstag und Bekanntmachung des Hinweises auf die Patenterteilung: **17.01.2007**
(21) Anmeldenummer: 05005797.5
(22) Anmeldetag: 17.03.2005
(51) Int. Cl.: H02K 3/52

(54) **Stator für eine elektrische Maschine**
Stator for an electrical machine
Stator pour machine électrique

(43) Veröffentlichungstag der Anmeldung: 27.09.2006
(73) Patentinhaber: ZF FRIEDRICHSHAFEN AG, 88046 Friedrichshafen (DE)
(72) Erfinder: Herlet, Werner, 97708 Bad Bocklet (DE); Büttner, Hubertus, 97688 Bad Kissingen (DE); Fister, Michael Dr., 97490 Poppenhausen-Kützberg (DE); Schmitt, Bernhard, 97535 Wasserlosen (DE); van Heyden, Marcus, 97456 Dittelbrunn (DE); Vollmuth, Alfons, 97456 Dittelbrunn-Hambach (DE); Röder, Manfred, 97422 Schweinfurt (DE); Jafoui, Khalid, 96191 Trunstadt (DE); Baumeister, Jens, 97490 Poppenhausen (DE); Welke, Knut, 97529 Sulzheim (DE)

(56) Entgegenhaltungen:
- EP-A- 1 453 189
- DE-A1- 19 920 127
- US-A1- 2003 094 879
- US-A1- 2004 251 752

## Beschreibung

Die Erfindung betrifft einen Stator für eine elektrische Maschine gemäß dem Oberbegriff des Patentanspruchs 1.

Bekannte Statoren für elektrische Maschinen weisen ein Statorjoch mit einer Anzahl von Statorzähnen auf, welche die elektrische Wicklung bspw. in Form von einzelnen, aus einem Isollerdraht gewickelten Statorspulen tragen. Die Spulen sind mit ihren beiden Spulenenden einzelnen Strängen zugeordnet und untereinander in einer vorbestimmtem Weise über gemeinsame Verbindungsleiter verschaltet. Im Fall einer Drehstrommaschine weist der Stator drei Stränge und damit zumindest drei Verbindungsleiter auf, die jeweils um 120° phasenversetzt mit Strom beaufschlagt werden. Die Verbindungsleiter werden zum Anschluss der elektrischen Maschine an eine Stromquelle einem Schaltkasten zugeführt.

Die DE 199 20 127 C2 offenbart einen Stator für eine elektrische Maschine, bei der die Verschaltungsanordnung elektrisch isolierte Verbindungsleiter aufweist, die konzentrisch zueinander zugeordnet sind. Die Anschlüsse für die Enden der Statorspulen sind an den Verbindungsleitern als von diesen abstehende Anschlussfortsätze ausgebildet, wobei für jedes Spulenende ein separater Anschlussfortsatz vorgesehen ist und durch die dort realisierte radiale Staffelung der Verbindungsleiter sich gleichfalls unterschiedliche Radiallagen für die Verbindungsstellen ergeben. Die elektrische Verbindung kann hierbei durch eine Fügetechnik, bspw. Schweißen, Löten und/oder einfaches Umwickeln der Anschlussfortsätze realisiert werden. Die Verbindungsleiter stützen sich gegenseitig und am Stator durch zwischen diese eingelegte Isoliermittelstreifen ab.

Die erläuterte Verschaltungstechnik hat den Nachteil, dass sehr viele Kontaktstellen vorhanden sind, welche jeweils einzeln, d.h. in einem separaten Fügevorgang, erzeugt werden müssen. Außerdem muss dabei beachtet werden, dass die Spulenenden je nach radialer Lage eines Verbindungsleiters vorher unterschiedlich abzulängen sind. Insgesamt ist eine solche Verschaltung sehr zeitaufwändig und damit kostenintensiv. Außerdem ist bei der Verschaltung der Statorspulen wegen der relativ großen Anzahl von Spulenenden die Gefahr von Fehlverschaltungen infolge fehlerhafter Zuordnungen zu den Verbindungsleitern erheblich. Trotz größter Sorgfalt kann diesbezüglich bei der Fertigung von Statoren keine vollständige Sicherheit erzielt werden.

Es ist die Aufgabe der vorliegenden Erfindung, einen Stator der vorgenannten Art konstruktiv so zu verbessern, dass insbesondere dessen Verschaltungsanordnung einfacher gestaltet ist und diese zugleich prozesssicher und automatisiert hergestellt werden kann.

Die Erfindung löst diese Aufgabe durch einen gattungsgemäßen Stator, der zusätzlich die im Kennzeichen des Patentanspruchs 1 aufgeführten Merkmale aufweist. Vorteilhafte Ausgestaltungen der Erfindungen sind in den Unteransprüchen wiedergegeben.

Die Erfindung schlägt vor, die Kontaktbereiche der Spulenenden mit der Verschaltungsanordnung auf einer gemeinsamen Axial- und Radiallage anzuordnen. Dadurch kann bspw. eine automatisierte Kontaktierung durch ein ortsfestes Werkzeug und einen um die Mittelachse drehbar gelagerten Stator ohne zusätzliche radiale Zuführbewegungen erfolgen. Eine erhebliche Produktivitätssteigerung kann erzielt werden, wenn jeweils zwei am Umfang benachbarte Enden von jeweils zwei Spulen mittels eines gemeinsamen Anschlusselements ein und demselben Verbindungsleiter zugeordnet werden. Das heißt, dass pro Fügevorgang gleichzeitig zwei Spulenenden verschaltet werden, wodurch sich bei der Herstellung eines Stators eine erheblich Zeit- und Kosteneinsparung ergibt.

Die Erfindung wird im Folgenden mittels der beigefügten Figuren anhand von zwei Ausführungsbeispielen erläutert. Es zeigen:
- Fig. 1: ein Ausschnitt eines mit Einzelspulen bestückten Stators und einer radial innen angeordneten Verschaltungsanordnung,
- Fig. 2: ein Axialschnitt entlang der Linie A-A des in Figur 1 dargestellten Stators,
- Fig. 3: eine Teildarstellung eines Verbindungsleiters mit seitlichen Anschlusselementen, die zur Verbindung mit Spulenenden vorgesehen sind,
- Fig. 4: ein in Kreisform gebogener Verbindungsleiter gemäß Fig. 3,
- Fig. 5: ein Ausschnitt eines mit Einzelspulen bestückten Stators und einer radial außen angeordneten Verschaltungsanordnung,
- Fig. 6: ein Axialschnitt entlang der Linie A-A des in Figur 5 dargestellten Stators,
- Fig. 7: eine perspektivische Darstellung von Elementen einer axial gestaffelten Verschaltungsanordnung,
- Fig.8: eine perspektivische Darstellung eines Zusammenbaus einer Verschaltungsanordnung nach Fig. 7,
- Fig. 9: eine Schnittdarstellung der Verschaltungsanordnung nach Fig. 7 mit einem Anschlussbolzen zur Verbindung mit einer Stromquelle.

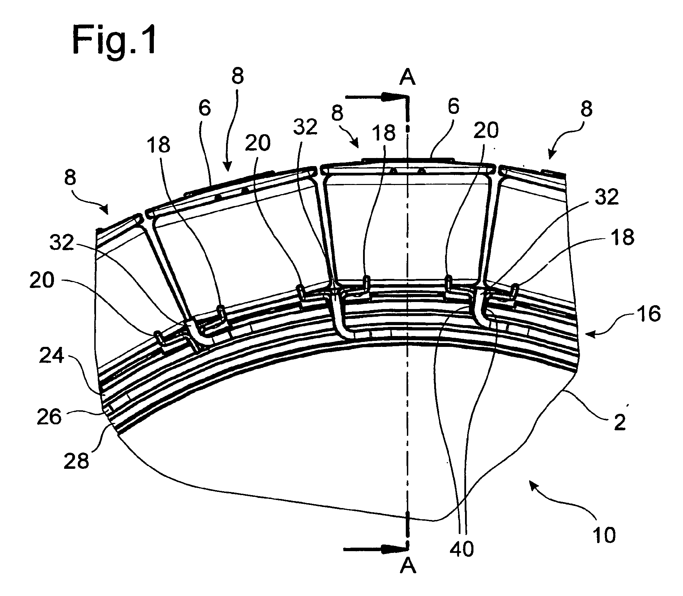

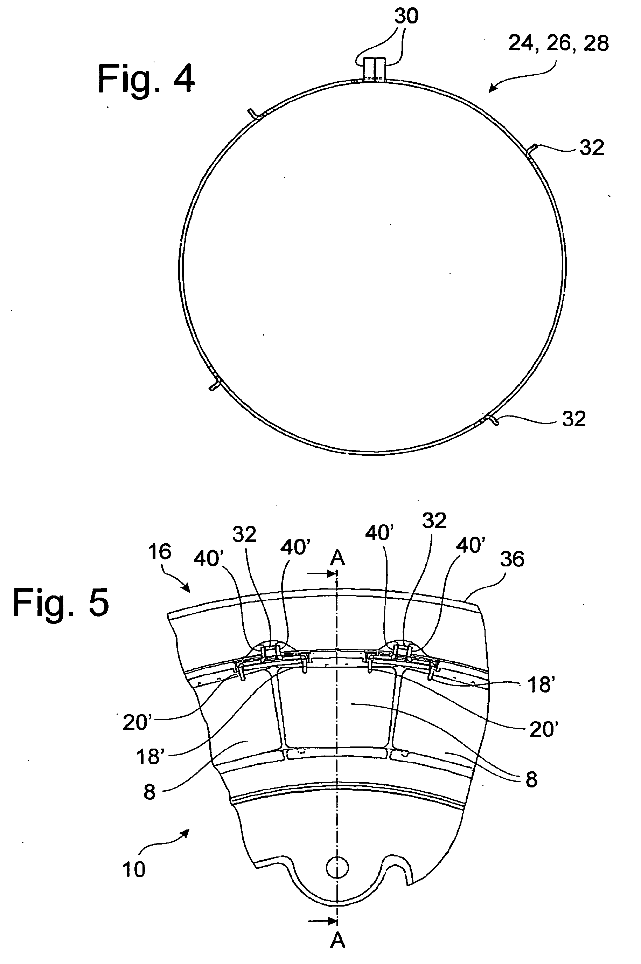

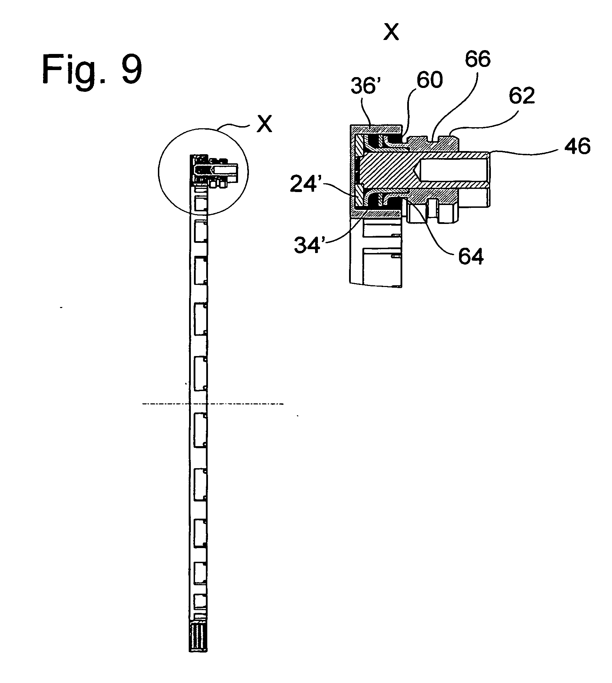

Die Figuren 1-4 zeigen ein erstes und die Figuren 5-9 ein zweites Ausführungsbeispiel eines Stators 10 mit einer Verschaltungsanordnung 16', wobei die Ausführung der Statorwicklung in beiden Fällen identisch ist und nur Unterschiede hinsichtlich der Ausgestaltung der Verschaltungsanordnung bestehen.

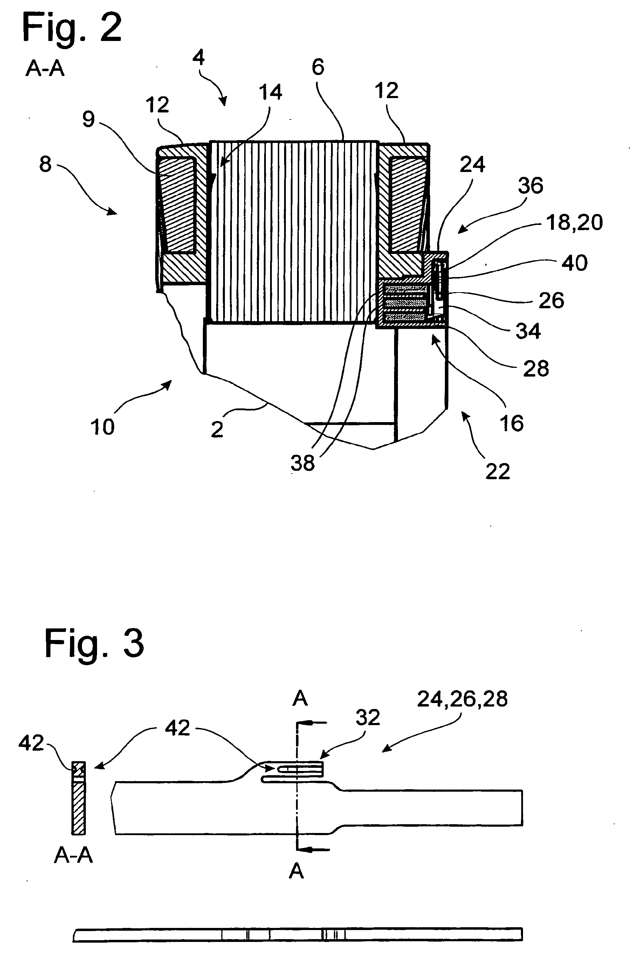

Die Figuren 1 und 2 zeigen einen Ausschnitt eines auf einer gekühlten Nabe 2 montierten Stators 10 für eine zeichnerisch nicht weiter dargestellte elektrische Maschine mit einem ringförmigen aus lamellierten Elektroblech bestehendem Statorjoch 4. Es handelt sich hierbei um einen Stator einer permanenterregten elektrischen Synchronmaschine in Außenläuferbauart. Jedoch ist die spezielle Bauart der elektrischen Maschine für die weiteren Erläuterungen unerheblich, es kann sich beispielsweise auch um einen Induktionsmotor, eine Reluktanzmaschine in Innen-, Außen- oder Scheibenläuferbauart oder irgendeine andere elektrische Maschine handeln. Das Satorjoch 4 weist in Umfangsrichtung eine Anzahl von radial nach außen gerichteten Zähnen 6 auf, wobei jeder Zahn 6 mit einer Einzelspule 8 bestückt ist. Die Spulen 8 bestehen aus einer Wicklung 9 eines einzelnen oder eines mehradrigen Leiters, wobei dessen Einzelleiter untereinander verdrillt sein können.

In den Fig. 1, 2 wurden die Einzelspulen 8 in einem vorherigen Fertigungsschritt mit Hilfe von jeweils zwei aus einem Isoliermaterial bestehenden Wickelkörpern 12 separat gewickelt und anschließend über die Zähne 6 des Statorjochs 4 geschoben und dort mittels einer Rastverbindung 14 gegen Verrutschen gesichert. Jede Spule 8 weist zwei Spulenenden 18, 20 auf, welche an einer gemeinsamen Stirnseite 22 des Stators 10 aus den Spulen 8 radial innen herausgeführt sind und zur gemeinsamen Verschaltung bereitstehen. Die Spulen 8 sind einzelnen Strängen zugeordnet und werden, wie weiter unten noch ausgeführt, über gemeinsame Verbindungsleiter 24, 26, 28 in einer vorbestimmten Weise miteinander verschaltet. Die Verbindungsleiter 24, 26, 28 sind koaxial, hier radial zueinander am Stator 10 angeordnet, wobei diese radial benachbart zu den Spulen 8 und axial auf deren Höhe platzsparend angeordnet sind.

Die Verbindungsleiter 24, 26, 28 sind gemäß der Darstellung in Fig. 3 als ringförmig gebogene Streifenleiter z.B. aus Kupfer ausgeführt, welche verlängerte und von diesem abstehende Endabschnitte 30 zum Anschluss der elektrischen Maschine an eine Stromversorgungseinrichtung aufweisen.
Zur Verbindung mit den Spulenenden 18, 20 dienen mehrere am Umfang verteilte Anschlusselemente 32, welche bei jedem der Verbindungsleiter 24, 26, 28 zunächst um den gleichen Betrag axial versetzt in Erstreckungsrichtung eines Verbindungsleiters abstehen und zur Verschaltung am Stator 10 radial ausgerichtet werden (Fig. 4), wobei zur Erzielung einer gemeinsamen Radiallage aller von den Spulenenden 18, 20 mit den Anschlusselementen 32 gebildeten Kontaktbereiche die Länge der Anschlusselemente 32 an den Verbindungsleitern 24, 26, 28 unterschiedlich ausgeführt ist. Selbstverständlich können die Anschlusselemente 32 zunächst auch senkrecht oder unter einem Winkel von der Erstreckungsrichtung der Verbindungsleiter 24, 26, 28 abstehen und dann entsprechend radial ausgerichtet werden.

Die Verbindungsleiter 24, 26, 28 sind an der gemäß den Figuren 1, 2 gezeigten Montageposition innerhalb eines Aufnahmeraumes 34 einer am Stator 10 angeordneten Tragestruktur 36 angeordnet. Die Tragestruktur 36 ist als separater Kunststoffring mit einem, eine einseitig offene Nut bildenden Aufnahmeraum 34 ausgeführt. Man erkennt ferner, dass die Tragestruktur 36 mit einer Stirnseite am Blechpaket 4 anliegt und radial zwischen der Statornabe 2 und den Wickelkörpern 12 angeordnet ist, wobei die Tragestruktur 36 durch eine zwischen dieser und den Wickelkörpern 12 zeichnerisch nicht dargestellte Schnappverbindung sicher am Stator fixiert ist. Der Aufnahmeraum 34 ist so bemessen, dass sowohl die Grundstruktur als auch die von dieser abstehenden Anschlusselemente 32 der Verbindungsleiter 24, 26, 28 von diesem aufgenommen werden können. Zur gegenseitigen Isolation der Verbindungsleiter 24, 26, 28 sind im Aufnahmeraum zwei Isolierstege 38 vorgesehen, die sich bspw. bei einer Spritzgussfertigung leicht in diesen integrieren lassen.

Mit Blick auf Fig. 1 ist erkennbar, dass die radial ausgerichteten Anschlusselemente 32 in Umfangsrichtung am Stator zwischen zwei benachbarten Enden 18, 20 von jeweils zwei Spulen 8 angeordnet und mit diesen elektrisch verschaltet sind. Dazu weist die Tragestruktur 36 Öffnungen zum Einführen der Spulenenden 18, 20 auf, wobei die Kontaktbereiche 40 der Verbindungsleiter 24, 26, 28 mit den Spulenenden 18, 20 innerhalb des Aufnahmeraumes 34 ausgebildet sind. Somit sind zwei am Umfang benachbarte Enden 18, 20 von jeweils zwei Spulen 8 mittels eines gemeinsamen Anschlusselements 32 ein und demselben Verbindungsleiter 24, 26, 28 zugeordnet. Insgesamt sind auf diese Weise alle Kontaktbereiche 40 der Spulenenden 18, 20 mit der Verschaltungsanordnung 16 auf einer gemeinsamen Axial- und Radiallage angeordnet, woraus sich der Vorteil ergibt, dass auch die jeweils einem Anschlußelement 32 zugeordneten zwei Spulenenden 18, 20 in einem Prozessschritt gleichzeitig unter Ausbildung von zwei Kontaktbereichen 40 mit diesem elektrisch verbunden werden.

In Fig. 1 sind die Anschlußelemente 32 mittig zwischen den beiden Spulenenden 18, 20 angeordnet. Es kann auch günstig sein, die Anschlußelemente 32 möglichst nahe an einem der Spulenenden 18, 20 festzulegen und das jeweils andere dadurch etwas verlängerte Spulenende 18, 20 am Wickelkörper 12 oder an der Tragestruktur 36 in Umfangsrichtung bspw. in einem Kanal zu fixieren und dieses Ende 18, 20 auf diese Weise mechanisch stabilisiert an das Anschlußelement 32 heranzuführen.

Wenn die Kontaktbereiche 40 bspw. durch eine Löt- oder Schweißverbindung erzeugt werden, so ist zur Erzielung einer möglichst großen Kontaktfläche vorteilhaft, die Anschlusselemente 32 mit Einprägungen 42 entsprechend der Leiterkontur zu versehen. Bei der Verwendung von runden Spulendrähten ist der Kontaktbereich 40. entsprechend Fig. 3 im Querschnitt halbkreisförmig ausgebildet.

Zum Schutz der Verbindungsleiter 24, 26, 28 und der Kontaktbereiche 40 vor Korrosionserscheinungen und zur Erhöhung der Stabilität der Verschaltungsanordnung 16 kann der Aufnahmeraum 34 komplett mit einem Dichtmittel vergossen werden, wobei die Verbindungsleiter 24, 26, 28 und die Kontaktbereiche 40 vollständig gegenüber der Umgebung gekapselt eingeschlossen sind.

Alternativ zu der als separaten Ring gefertigten Tragestruktur 36 kann diese auch segmentweise zusammengesetzt werden, indem bspw. an den Wickelkörpern 12 nach radial innen oder außen entsprechende Strukturen ausgebildet werden, die nach der Montage aller Spulen 8 am Stator 10 einen geschlossenen Ring zur Aufnahme der Verbindungsleiter 24, 26, 28 ausbilden.

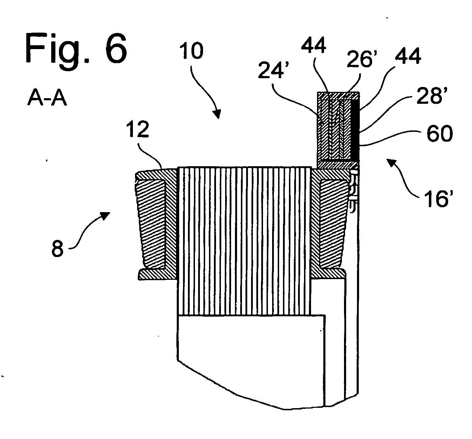

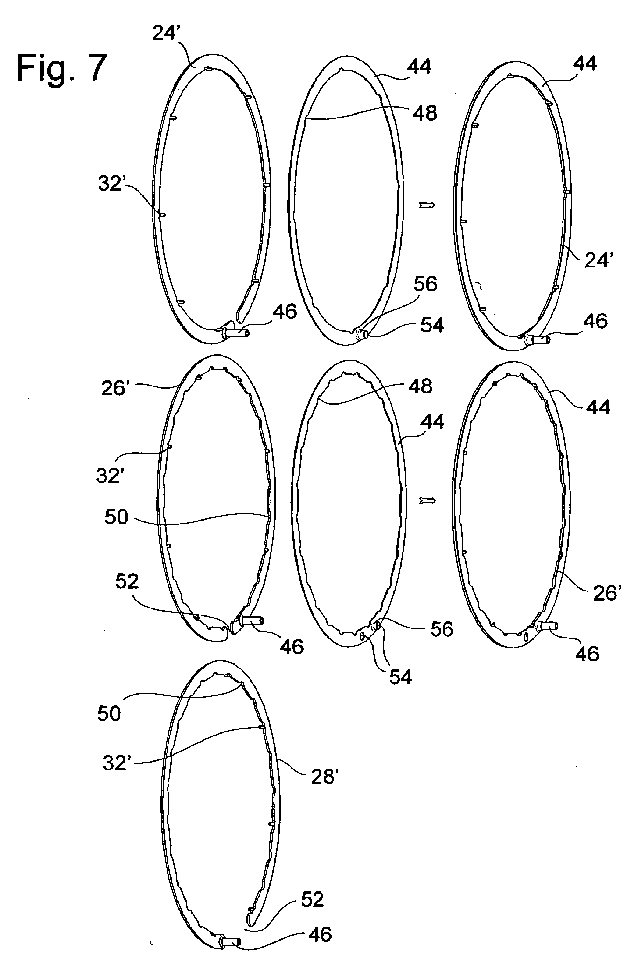

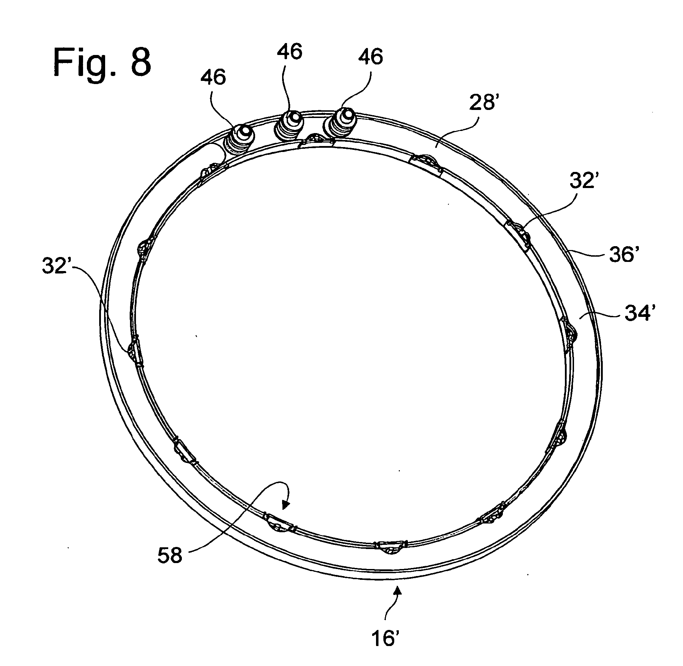

Die Figuren 5-9 zeigen beispielhaft, wie an einem Stator 10 eine Verschaltungsanordnung 16' mit einer axialen Staffelung der einzelnen Verbindungsleiter 24', 26', 28' unter Zwischenlagerung von Isolierscheiben 44, gestaltet werden kann, welche wie in den Fig. 5,6 gezeigt, am Stator 10 radial oberhalb der Spulen 8 durch Arretierung an den Wickelkörpern 12 befestigt ist. Dazu kann ebenfalls wie im vorstehend erläuterten Beispiel von Streifenleitern ausgegangen werden, die hier durch Hochkantrollieren in eine Kreisform überführt wurden und eine offene Ringstruktur ausbilden (Fig. 7). Jeder der Verbindungsleiter 24', 26', 28' weist an dessen Innenseite in Axialrichtung abgewinkelte Anschlusselemente 32' zur Verbindung mit Spulenenden 18', 20' und zum Anschluss des Stators 10 an einer Stromversorgungseinrichtung einen von diesem abstehenden Anschlussbolzen 46 auf. Die Anschlusselemente 32' sind an den Verbindungsleitern 24', 26', 28' zunächst nach radial innen ausgerichtet und werden dann axial abgewinkelt, so dass diese letztlich innerhalb der radialen Erstreckung der Verbindungsleiter 24', 26', 28' ausgebildet sind. Da sich die Anschlußelemente 32' der einzelnen Verbindungsleiter 24', 26', 28' zumindest teilweise axial überlappen sind an den Isolierscheiben 44 Ausnehmungen 48 und an den benachbarten Verbindungsleitern 26', 28' Ausnehmungen 50 ausgebildet. Gemäß der perspektivischen Darstellung der Fig. 7 ist erkennbar, dass die Anschlusselemente 32' und der Anschlussbolzen 46 bei den Verbindungsleitern 24'und 26' auf derselben Stirnseite ausgebildet sind, während diese bei dem Verbindungsleiter 28' auf unterschiedlichen Stirnseiten erfolgt, wobei im Zusammenbau nach der Fig.8 die Anschlussbolzen 46 in eine gemeinsame Richtung zeigen. Auf diese Weise können die Anschlusselemente 32' zur Verschaltung mit den Spulenenden 18', 20' und deren Kontaktbereiche im Wesentlichen axial innerhalb der Verbindungsleiter 24', 26', 28' angeordnet werden, wodurch sich insgesamt eine sehr schmale axiale Baubreite der Verschaltungsanordnung 16' ergibt.

Die in axialer Richtung abstehenden Anschlussbolzen 46 sind im Zusammenbau in Umfangsrichtung versetzt angeordnet und durch Freiräume 52 der Verbindungsleiter 26', 28' sowie Öffnungen 54 in den Isolierscheiben 44 hindurchgeführt, welche zusätzlich axial ausgerichtete Ringkragen 56 aufweisen. Die Verbindungsleiter 24', 26', 28' werden, ebenso wie bereits im ersten Ausführungsbeispiel erläutert, von einer Tragestruktur 36' aufgenommen, welche als separater Kunststoffring mit einem, eine einseitig offene Nut bildenden Aufnahmeraum 34' ausgeführt ist. Im radial inneren Umfang sind im Bereich der Anschlusselemente 32' taschenförmige Erweiterungen 58 ausgebildet, die eine erhöhte Freiheit bei der Kontaktierung mit den Spulenenden 18', 20' erlaubt.

Die Anschlussbolzen 46 sind mit den Verbindungsleitern verlötet, d. h. dass auch diese Befestigungsbereiche innerhalb des Aufnahmeraumes 34' ausgebildet sind. Nach dem Einlegen der mittels der Isolierscheiben 44 gegenseitig isolierten Verbindungsleiter 24', 26', 28' in die Ringnut 34' der Tragestruktur 36' wird letztere gemäß Fig. 5 so am Stator 10 befestigt, dass die Anschlusselemente 32' jeweils zwischen zwei benachbarten Spulen 8 angeordnet sind und zwei am Umfang benachbarte Enden 18', 20' von jeweils zwei Spulen 8 mittels eines gemeinsamen Anschlusselements 32' mit ein und demselben Verbindungsleiter 24', 26', 28' bspw. durch ein automatisiertes Kontaktschweißverfahren verbunden werden können.

Die Verschaltungsanordnung 16' kann nach Erzeugung der elektrischen Kontaktbereiche wie bereits vorstehend ausgeführt mit einem Dichtmittel 60 verschlossen, bspw. mit einem Harz oder Silikon vergossen werden (Fig. 6). Zum fluiddichten Einbau des Stators 10 in ein Gehäuse können die Anschlussbolzen 46 mit dicht auf diesen angeordnete Buchsen 62 versehen werden, welche mit einem Ringkragen 64 innerhalb des Aufnahmeraumes mit dem Dichtmittel 60 abgedichtet sind. Jede Buchse 62 weist eine Ringnut 66 zur Aufnahme einer Ringdichtung auf, die mit einer Öffnung des Gehäuses eine Dichtverbindung eingehen kann.

### Bezugszeichenliste

- 2: Statornabe
- 4: Statorjoch
- 6: Zahn
- 8: Spule
- 10: Stator
- 12: Wickelkörper
- 14: Rastverbindung
- 16, 16': Verschaltungsanordnung
- 18, 20: Spulenenden
- 22: Stirnseite
- 24, 24, 28: Verbindungsleiter
- 24', 26', 28': Verbindungsleiter
- 30: Endabschnitt
- 32, 32': Anschlußelement
- 34, 34': Aufnahmeraum
- 36, 36': Tragestruktur
- 38: Isoliersteg
- 40, 40': Kontaktbereich
- 42: Einprägung
- 44: Isolierscheibe
- 46: Anschlußbolzen
- 48: Ausnehmung
- 50: Ausnehmung
- 52: Freiraum
- 54: Öffnung
- 56: Ringkragen
- 58: Erweiterung
- 60: Dichtmittel
- 62: Buchse
- 64: Ringkragen
- 66: Ringnut

## Patentansprüche

1. Stator (10) für eine elektrische Maschine mit einem ringförmigen Statorjoch (4), an dem eine Anzahl von Statorspulen (8) angeordnet ist, welche mit deren Spulenenden (18, 20; 18', 20') zur Verschaltung mit einer Verschaltungsanordnung (16, 16') vorgesehen sind und wobei die Verschaltungsanordnung (16, 16') konzentrisch zueinander angeordnete und elektrisch gegeneinander isolierte Verbindungsleiter (24, 26, 28; 24', 26', 28') aufweist, die über Anschlusselemente (32, 32') mit den Enden der Statorspulen (18, 20; 18', 20') unter Ausbildung elektrischer Kontaktbereiche (40, 40') verbunden sind,
**dadurch gekennzeichnet,**
**dass** die Kontaktbereiche (40, 40') der Spulenenden (18, 20; 18', 20') mit der Verschaltungsanordnung (16, 16') auf einer gemeinsamen Axial- und Radiallage angeordnet sind, wobei jeweils zwei am Umfang benachbarte Enden (18, 20; 18', 20') von jeweils zwei Spulen (8) mittels eines gemeinsamen Anschlusselements (32, 32') ein und demselben Verbindungsleiter (24, 26, 28; 24', 26', 28') zugeordnet sind.

2. Stator gemäß Anspruch 1,
**dadurch gekennzeichnet,**
**dass** die Anschlusselemente (32, 32') in Umfangsrichtung zwischen zwei benachbarten Enden (18, 20; 18', 20') von jeweils zwei Spulen angeordnet sind.

3. Stator gemäß Anspruch 1 oder 2,
**dadurch gekennzeichnet,**
**dass** die Verbindungsleiter (24, 26, 28; 24', 26', 28') in einem Aufnahmeraum (34, 34') einer am Stator (10) angeordneten Tragestruktur (36, 36') angeordnet sind.

4. Stator gemäß Anspruch 3,
**dadurch gekennzeichnet,**
**dass** der Aufnahmeraum (34, 34') als einseitig offene Nut ausgeführt ist.

5. Stator gemäß Anspruch 3 oder 4 ,
**dadurch gekennzeichnet,**
**dass** die Kontaktbereiche (40, 40') der Verbindungsleiter (24, 26, 28; 24', 26', 28') mit den Spulenenden (18, 20; 18', 20') innerhalb des Aufnahmeraumes (34, 34') ausgebildet sind.

6. Stator gemäß einem der Ansprüche 2-5,
**dadurch gekennzeichnet,**
**dass** der Aufnahmeraum (34, 34') mit einem Dichtmittel (60) abgedichtet ist.

7. Stator gemäß einem der Ansprüche 3-6,
**dadurch gekennzeichnet,**
**dass** die Spulen (8) von Wickelkörpern (12) getragen werden und die Tragestruktur (36, 36') an den Wickelkörpern (12) angeordnet ist.

8. Stator gemäß einem der Ansprüche 3-7,
**dadurch gekennzeichnet,**
**dass** die Tragestruktur (36, 36') aus einzelnen Segmenten gebildet wird, welche jeweils an den Wickelkörpern (12) ausgeführt sind.

9. Stator gemäß einem der Ansprüche 3-7,
**dadurch gekennzeichnet,**
**dass** die Tragestruktur (36, 36') separat ausgeführt ist.

10. Stator gemäß einem der Ansprüche 1-9,
**dadurch gekennzeichnet,**
**dass** die Verbindungsleiter (24, 26, 28) am Stator (10) radial gestaffelt angeordnet und als Streifenleiter mit axialseitigen Anschlusselementen (32) ausgeführt sind, welche radial ausgerichtet sind.

11. Stator gemäß einem der Ansprüche 1-9,
**dadurch gekennzeichnet,**
**dass** die Verbindungsleiter (24', 26', 28') am Stator axial gestaffelt angeordnet und als Streifenleiter mit radialseitigen Anschlusselementen (32') ausgeführt sind, welche axial ausgerichtet sind.

12. Stator gemäß einem der Ansprüche 1-11,
**dadurch gekennzeichnet,**
**dass** zum Anschluss des Stators (10) an eine Stromversorgungseinrichtung ein Verbindungsleiter (24, 26, 28) zumindest einen verlängerten und von diesem abstehenden Endabschnitt (30) aufweist.

13. Stator gemäß einem der Ansprüche 1-11,
**dadurch gekennzeichnet,**
**dass** zum Anschluss des Stators (10) mit einer Stromversorgungseinrichtung ein Verbindungsleiter (24', 26', 28') einen von diesem abstehenden Anschlussbolzen (46) aufweist.

14. Stator gemäß Anspruch 13,
**dadurch gekennzeichnet,**
**dass** der Befestigungsbereich des Anschlussbolzens (46) an dem Verbindungsleiter (24', 26', 28') innerhalb des Aufnahmeraumes (34') ausgebildet ist.

15. Stator gemäß einem der Ansprüche 1-14,
**dadurch gekennzeichnet,**
**dass** die Anschlusselemente (32, 32') zur Verbindung mit den Spulenenden (18, 20; 18', 20') integral mit den Verbindungsleitern (24, 26, 28; 24', 26', 28') ausgeführt sind.

16. Stator gemäß einem der Ansprüche 1-15,
**dadurch gekennzeichnet,**
**dass** die Anschlusselemente (32) an die Kontur der Spulenenden (18, 20) angepasste Einprägungen (42) aufweisen.

17. Stator gemäß einem der Ansprüche 13-16, wobei der Stator ein Gehäuse aufweist,
**dadurch gekennzeichnet,**
**dass** zur fluiddichten Anordnung des Stators (10) in dem Gehäuse ein Anschlussbolzen (46) eine dicht auf diesem angeordnete Buchse (62) aufweist, welche mit einem Ringkragen (56) innerhalb des Aufnahmeraumes (34') mit dem Dichtmittel (60) abgedichtet ist und wobei die Buchse (62) eine Ringnut (66) zur Aufnahme einer Ringdichtung aufweist, die mit einer Öffnung des Gehäuses eine Dichtverbindung eingeht.

## Claims

1. Stator (10) for an electrical machine having an annular stator yoke (4) on which a number of stator coils (8) are arranged, whose coil ends (18, 20; 18', 20') are intended to be connected to a connection arrangement (16, 16'), and in which the connection arrangement (16, 16') has connection conductors (24, 26, 28; 24', 26', 28') which are arranged concentrically with respect to one another, are electrically isolated from one another, and are connected via connecting elements (32, 32') to the ends of the stator coils (18, 20; 18', 20') forming electrical contact areas (40, 40'),
**characterized in that**
the contact areas (40, 40') of the coil ends (18, 20; 18', 20') are arranged with the connection arrangement (16, 16') in a common axial and radial position, in which in each case two ends (18, 20; 18', 20'), which are adjacent on the circumference, of in each case two coils (8) are associated with one and the same connection conductor (24, 26, 28; 24', 26', 28') by means of a common connecting element (32, 32').

2. Stator according to Claim 1,
**characterized in that**
the connecting elements (32, 32') are arranged in the circumferential direction between two adjacent ends (18, 20; 18', 20') of in each case two coils.

3. Stator according to Claim 1 or 2,
**characterized in that**
the connection conductors (24, 26, 28; 24', 26', 28') are arranged in a holding area (34, 34') of a supporting structure (36, 36') which is arranged on the stator (10).

4. Stator according to Claim 3,
**characterized in that**
the holding area (34, 34') is in the form of a groove which is open on one side.

5. Stator according to Claim 3 or 4,
**characterized in that**
the contact areas (40, 40') of the connection conductors (24, 26, 28; 24', 26', 28') are formed with the coil ends (18, 20; 18', 20') within the holding area (34, 34').

6. Stator according to one of Claims 2-5,
**characterized in that**
the holding area (34, 34') is sealed with a sealing means (60).

7. Stator according to one of Claims 3-6,
**characterized in that**
the coils (8) are supported by winding formers (12), and the supporting structure (36, 36') is arranged on the winding formers (12).

8. Stator according to one of Claims 3-7,
**characterized in that**
the supporting structure (36, 36') is formed from individual segments, which are each formed on the winding formers (12).

9. Stator according to one of Claims 3-7,
**characterized in that**
the supporting structure (36, 36') is formed separately.

10. Stator according to one of Claims 1-9,
**characterized in that**
the connection conductors (24, 26, 28) are arranged staggered radially on the stator (10) and are in the form of strip conductors with connecting elements (32) on the axial side, which are aligned radially.

11. Stator according to one of Claims 1-9,
**characterized in that**
the connection conductors (24', 26', 28') are arranged staggered axially on the stator and are in the form of strip conductors with connecting elements (32') on the radial side, which are aligned axially.

12. Stator according to one of Claims 1-11,
**characterized in that**,
for connection of the stator (10) to a power supply device, one connection conductor (24, 26, 28) has at least one lengthened end section (30) which projects from it.

13. Stator according to one of Claims 1-11,
**characterized in that**,
for connection of the stator (10) to a power supply device, one connection conductor (24', 26', 28') has a connecting bolt (46) which projects from it.

14. Stator according to Claim 13,
**characterized in that**
the attachment area of the connecting bolt (46) to the connection conductor (24', 26', 28') is formed within the holding area (34').

15. Stator according to one of Claims 1-14,
**characterized in that**
the connecting elements (32, 32') for connection to the coil ends (18, 20; 18', 20') are formed integrally with the connection conductors (24, 26, 28; 24', 26', 28').

16. Stator according to one of Claims 1-15,
**characterized in that**
the connecting elements (32) have stamped-in areas (42) which are matched to the contour of the coil ends (18, 20).

17. Stator according to one of Claims 13-16, in which the stator has a housing,
**characterized in that**,
for fluid-tight arrangement of the stator (10) in the housing, one connecting bolt (46) has a bush (62) which is arranged in a sealed manner on it and is sealed by the sealing means (60) with an annular collar (56) within the holding area (34'), and in which the bush (62) has an annular groove (66) for holding an annular seal which forms a sealed joint with an opening in the housing.

## Revendications

1. Stator (10) pour une machine électrique avec une armature de stator annulaire (4), sur laquelle sont disposées plusieurs bobines de stator (8), qui sont prévues pour être reliées par leurs extrémités de bobines (18, 20; 18', 20') à un dispositif de câblage (16, 16') et dans lequel le dispositif de câblage (16, 16') comprend des conducteurs de raccordement (24, 26, 28; 24', 26', 28') disposés concentriquement les uns aux autres et électriquement isolés les uns des autres, qui sont raccordés par des éléments de raccordement (32, 32') aux extrémités des bobines de stator (18, 20; 18', 20') en formant des zones de contact électrique (40, 40'), **caractérisé en ce que** les zones de contact (40, 40') des extrémités de bobines (18, 20; 18', 20') avec le dispositif de câblage (16, 16') sont disposées sur une couche axiale et radiale commune, dans lequel chaque fois deux extrémités voisines à la périphérie (18, 20; 18', 20') de chaque fois deux bobines (8) sont associées à un seul et même conducteur de raccordement (24, 26, 28; 24', 26', 28') au moyen d'un élément de raccordement commun (32, 32').

2. Stator selon la revendication 1, **caractérisé en ce que** les éléments de raccordement (32, 32') sont disposés en direction périphérique entre deux extrémités voisines (18, 20; 18', 20') de chaque fois deux bobines.

3. Stator selon la revendication 1 ou 2, **caractérisé en ce que** les conducteurs de raccordement (24, 26, 28; 24', 26', 28') sont disposés dans une chambre de réception (34, 34') d'une structure portante (36, 36') disposée sur le stator (10).

4. Stator selon la revendication 3, **caractérisé en ce que** la chambre de réception (34, 34') est formée par une rainure ouverte d'un côté.

5. Stator selon la revendication 3 ou 4, **caractérisé en ce que** les zones de contact (40, 40') des conducteurs de raccordement (24, 26, 28; 24', 26', 28') avec les extrémités de bobines (18, 20; 18', 20') sont formées à l'intérieur de la chambre de réception (34, 34').

6. Stator selon l'une quelconque des revendications 2 à 5, **caractérisé en ce que** la chambre de réception (34, 34') est fermée de façon étanche avec un moyen d'étanchéité (60).

7. Stator selon l'une quelconque des revendications 3 à 6, **caractérisé en ce que** les bobines (8) sont portées par des corps de bobine (12) et la structure portante (36, 36') est disposée sur les corps de bobine (12).

8. Stator selon l'une quelconque des revendications 3 à 7, **caractérisé en ce que** la structure portante (36, 36') est formée de segments individuels, qui sont chaque fois réalisés sur les corps de bobine (12).

9. Stator selon l'une quelconque des revendications 3 à 7, **caractérisé en ce que** la structure portante (36, 36') est réalisée séparément.

10. Stator selon l'une quelconque des revendications 1 à 9, **caractérisé en ce que** les conducteurs de raccordement (24, 26, 28) sont disposés de manière échelonnée radialement sur le stator (10) et sont réalisés sous la forme de conducteurs à bande avec des éléments de raccordement (32) du côté axial, qui sont orientés radialement.

11. Stator selon l'une quelconque des revendications 1 à 9, **caractérisé en ce que** les conducteurs de raccordement (24', 26', 28') sont disposés de manière échelonnée axialement sur le stator et sont réalisés sous la forme de conducteurs à bande avec des éléments de raccordement (32') du côté radial, qui sont orientés axialement.

12. Stator selon l'une quelconque des revendications 1 à 11, **caractérisé en ce que**, pour le raccordement du stator (10) à un dispositif d'alimentation électrique, un conducteur de raccordement (24, 26, 28) présente au moins une partie d'extrémité (30) prolongée et sortant de celui-ci.

13. Stator selon l'une quelconque des revendications 1 à 11, **caractérisé en ce que**, pour le raccordement du stator (10) à un dispositif d'alimentation électrique, un conducteur de raccordement (24', 26', 28') présente un boulon de raccordement (46) sortant de celui-ci.

14. Stator selon la revendication 13, **caractérisé en ce que** la région de fixation du boulon de raccordement (46) au conducteur de raccordement (24', 26', 28') est formée à l'intérieur de la chambre de réception (34').

15. Stator selon l'une quelconque des revendications 1 à 14, **caractérisé en ce que** les éléments de raccordement (32, 32') pour le raccordement aux extrémités de bobines (18, 20; 18', 20') sont réalisés intégralement avec les conducteurs de raccordement (24, 26, 28; 24', 26', 28').

16. Stator selon l'une quelconque des revendications 1 à 15, **caractérisé en ce que** les éléments de raccordement (32) présentent des empreintes (42) adaptées au contour des extrémités de bobines (18, 20).

17. Stator selon l'une quelconque des revendications 13 à 16, dans lequel le stator comporte un boîtier, **caractérisé en ce que**, pour la disposition étanche au fluide du stator (10) dans le boîtier, un boulon de raccordement (46) comprend une douille (62) disposée de façon étanche sur celui-ci, qui est rendue étanche avec le moyen d'étanchéité (60) avec un col annulaire (56) à l'intérieur de la chambre de réception (34') et dans lequel la douille (62) présente une rainure annulaire (66) pour loger un joint torique, qui forme un assemblage étanche avec une ouverture du boîtier.
